## Europäisches Patentamt

## European Patent Office

## Office européen des brevets

(19)

(11) Publication number: **0 018 087**
**B1**

(12) **EUROPEAN PATENT SPECIFICATION**

(45) Date of publication of patent specification: **20.06.84**

(51) Int. Cl.³: **A 43 D 65/02, B 29 F 1/022**

(21) Application number: **80300851.5**

(22) Date of filing: **19.03.80**

(54) Method of making a last for an article of footwear, and last made by this method.

(30) Priority: **22.03.79 FR 7907328**

(43) Date of publication of application:
**29.10.80 Bulletin 80/22**

(45) Publication of the grant of the patent:
**20.06.84 Bulletin 84/25**

(84) Designated Contracting States:
**BE CH DE FR GB IT LU NL**

(56) References cited:
**FR - A - 2 183 515
FR - A - 2 245 153
FR - A - 2 322 560
GB - A - 1 026 104
US - A - 3 099 862
US - A - 3 724 014**

(73) Proprietor: **THE BRITISH BATA SHOE COMPANY LIMITED**
**East Tilbury**
**Grays Essex, RM18 8RL (GB)**

(72) Inventor: **Frau, Giuliano**
**c/o Les Manufactures De Saint-Marcel**
**Saint-Marcel (Eure) (FR)**

(74) Representative: **Maguire, Peter Albert**
**Fitzpatricks Kern House 61/62 Lincoln's Inn Fields**
**London WC2B 6EX (GB)**

Courier Press, Leamington Spa, England.

## Description

The invention relates to lasts for articles of footwear.

It is known to make footwear articles by the direct injection moulding of soles e.g. of polyurethane and other thermoplastic materials to lasted uppers. It is a disadvantage of such injection moulding processes that leakages or burrs occur during the injection since in practice the profile of the last does not correspond precisely to the profile of the internal surfaces of the sole mould in the area of the joint between the lasted upper and the sole mould. In particular these leakages are due to the difference in thickness of the materials employed to make the upper or to the superimposition of several materials to make the upper. Moreover the production costs of moulds and of the known lasts are relatively high.

It is known to make lasts having an outer layer of elastomeric material (see GB 1375138 Funck) and lasts made from a resilient polymer material (see GB 1444772 Matzopoulos).

It is an object of the present invention to remedy these shortcomings by providing an inexpensive method of making a last which conforms closely in shape to the sole mould in the vicinity of the join therebetween.

To this end, the invention provides a method of making a last for an article of footwear, comprising covering the lower part of a last blank with a simulated upper, making a first mould from the covered last, relieving the last blank in the zone of its intended joint with a sole mould, applying a polyurethane based primer to the relieved part of the last blank, treating the internal surface of the first mould with a mould release agent, centring the last blank in the sole mould by its upper part, introducing an elastomeric material into the free space existing between the relieved part of the last blank and the internal surface of the first mould to form a sealing joint on the last, and removing the last from the first mould after cross-linking of the elastomer.

This process is simple and rapid and is also effective because it avoids or reduces "flashing" during use of the last, since as the sealing joint is compressible, it prevents the passage of plastics material during the injection between the last and the internal wall of the sole mould.

Preferably anchoring holes are made in the relieved part of the last, preferably passing right through the last.

The method may comprise making a second mould from the imprint of the relieved last, injecting an elastomer into the second mould to form a rigid plastics blank, removing the plastics blank from the mould after crosslinking, cleaning the relieved part of the plastics blank and applying a polyurethane based primer thereto, placing the blank plastics last in the first mould after treating the mould with a release agent and introducing elastomer into the first mould to form a sealing joint on the plastics last.

This process makes it possible to facilitate the production of lasts. The resin or plaster moulds used for the production of these lasts can be employed a large number of times either for the production of sealing joints alone or for the production of lasts furnished with a sealing joint of a single size in order so to reduce the production costs of the moulds and the lasts.

From another aspect the invention provides a last made by the methods described above and comprising on its peripheral surface an elastic sealing joint. If desired the last may be made from an elastomer material such as rigid cellular polyurethane.

An embodiment of the invention is diagrammatically illustrated by way of example in the accompanying drawings in which:—

Figure 1 is a side view of a basic last for the application of the process;

Figure 2 is a side view of the last as in Figure 1 after relieving;

Figure 3 is a perspective view of the first mould allowing the sealing joint to be made;

Figure 4 is a perspective view of the mould as in Figure 3 containing the relieved last of Figure 2;

Figure 5 is a view from below of the last provided with a sealing joint;

figure 6 is a cross-sectional view of the last as in Figure 5;

Figure 7 is a perspective view of the second mould;

Figure 8 is a perspective view of the second mould of Figure 7 supplemented;

Figure 9 is a side view of the last obtained in the moulds shown in Figures 7 and 8;

Figure 10 is a side view of the relieved last corresponding to the last of Figure 9;

Figure 11 is a view from below of the last as in Figures 9 and 10 provided with a sealing joint;

Figure 12 is a cross sectional view of the last as in Figure 11;

Figure 13 is a side view of the last corresponding to that shown in Figures 11 and 12.

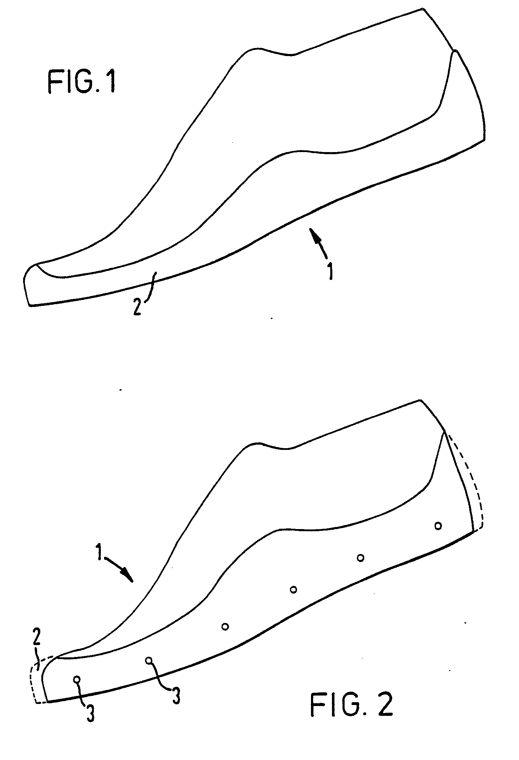

According to Figure 1, to allow the application of the production process for sealing joints for lasts of articles of footwear, a last 1 is made in wood or in metal and the periphery of the last 1 is covered in its lower part by a coating 2. This coating is constituted by a self-adhesive material e.g. of coated fabric or vinyl and forms a thickness of 0.5 mm. The last 1 so covered makes it possible to produce the imprint of the first mould described below.

According to Figure 2, the last 1 is relieved round the whole of the lower part of its periphery. The relieved periphery is shown in solid line in this Figure, the broken line corresponding to the covering 2 as described in Figure 1. The amount of relieving can vary according to circumstances e.g. between 4 and 6 mm. The wooden or metal last incorporates in its relieved peripheral surface anchoring holes 3.

The relieved last 1 is then placed in the mould bearing the imprint of the last shown in Figure 1.

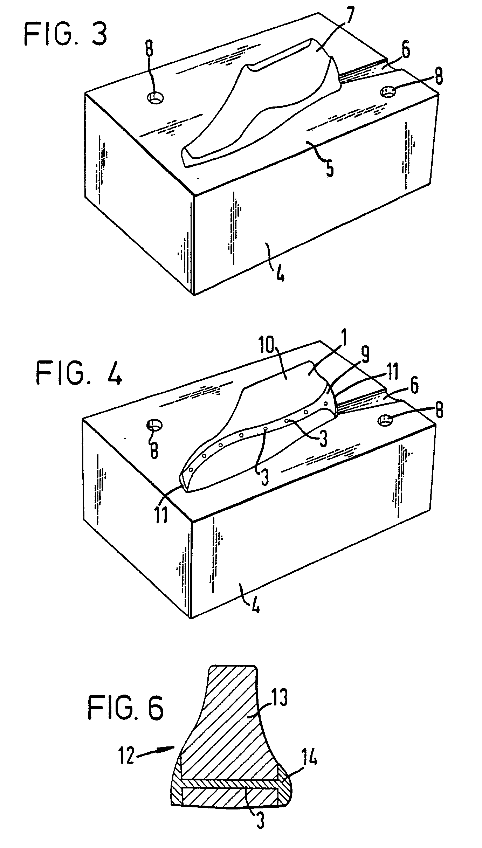

According to Figure 3, the mould allows the positioning of a sealing joint on the lower periphery of the last 1. The mould is formed from two halves, the mould half 4 forming a shell constituting the lower part of the mould. The mould halves, such as the half mould 4 for instance, are made in plaster or in resin. The imprint of the last 1 as shown in Figure 1 is transposed onto the face 5. The mould half 4 is also provided with a pouring duct 6 opening at the level of the heel of the imprint 7 of the last 1 (Figure 1). The duct 6 makes it possible later to supply the mould with an elastomer such as polyurethane. The surface 5 of the half mould 4 also incorporates bossings 8. The bossings 8 make it possible to register the two mould halves correctly when they are assembled to form the complete mould.

According to Figure 4, the mould half 4 receive the relieved last 1 as shown in solid line in Figure 2. The chamfered last 1 is located in the mould half 4 and is registered therein through its upper part 10. As a result of relieving the last a cavity 11 is formed in the mould and which extends round the periphery of the last into which cavity elastomer poured when the mould halves are superimposed.

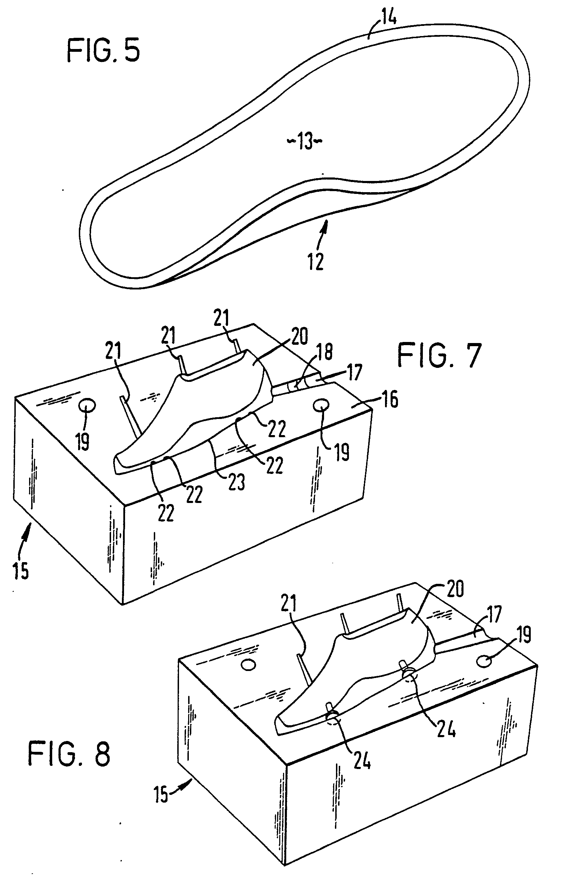

Figure 5 shows the last 12 obtained after removal from the mould formed by the mould halves shown in Figures 3 and 4 above. The last 12, viewed from below, incorporates in its median part a wooden or metal core 13, and over the whole of the periphery of the peripheral surface of the core 13 there is a coating of from 4 to 6 mm in thickness of elastomer constituting an elastic sealing joint 14.

In Figure 6, the last 12 of Figure 5 is shown in cross-section. In this Figure it can be seen that the elastomer material has penetrated into the holes 3.

According to Figure 7, a mould half 15 constitutes the lower part of a second mould for use in production process in conjunction with a production last, as distinct from the last shown in the preceding Figures. The mould half 15 is made in plaster or in resin. It carries on its face 16 the imprint of the chamfered last 1 as in Figure 1 above. The mould half 15 also has an injection duct 17 provided with an obturator 18, through which duct the mould cavity is supplied with an elastomer such as polyurethane. The face 16 of the mould half 15 is provided with bossings 19 to facilitate accurate register between the two mould halves.

Vents 21 are also provided in the upper part of the imprint 20 corresponding to the chamfered last 1. Finally, points 22 are located on the base 23 of the imprint. These points 22 facilitate the positioning of threaded pegs to be described below.

According to Figure 8 the mould half 15 incorporates pegs 24 positioned at the points 22 mentioned in connection with Figure 7. The pegs 24 are threaded and are made in a material such as polypropylene. The pegs 24 serve for the later fixing of the insole on the production last made with the aid of the mould halves 15, only the lower part of which is shown in this Figure.

After closing of the mould formed by the mould halves 15, an elastomer such as rigid microcellular polyurethane having a density of 0.3 to 0.4 gm/cm³ and good mechanical properties is injected.

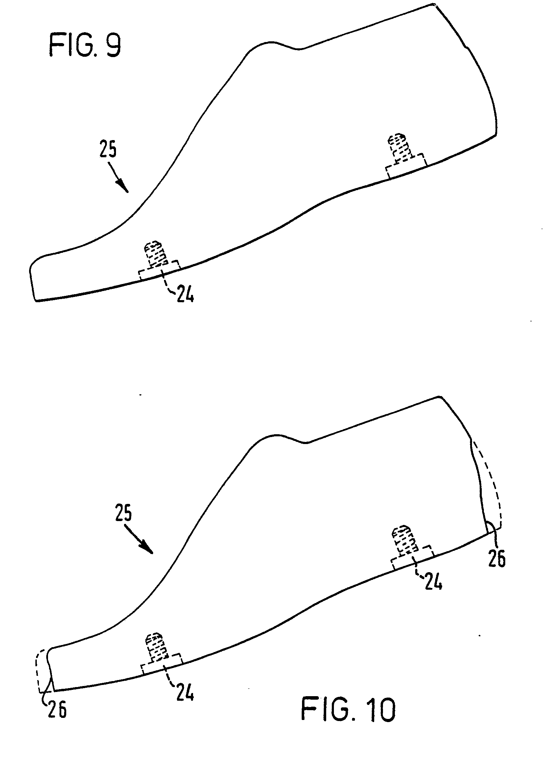

In Figure 9, there is shown the last 25 in rigid cellular polyurethane which is obtained from the mould. This last is provided in its lower part with pegs 24 described in Figure 8.

According to Figure 10, after removal from the mould the polyurethane last 25 is relieved thanks to a protuberance 26 which is found in the mould half 15, in accordance with Figure 7. The mould half 15, as far as the protuberance 26 is concerned, is the faithful reproduction of the last 1, as in Figure 2. The relieved last 25 is then placed in the mould conforming to Figure 3 in order to attach a sealing joint to the last 25.

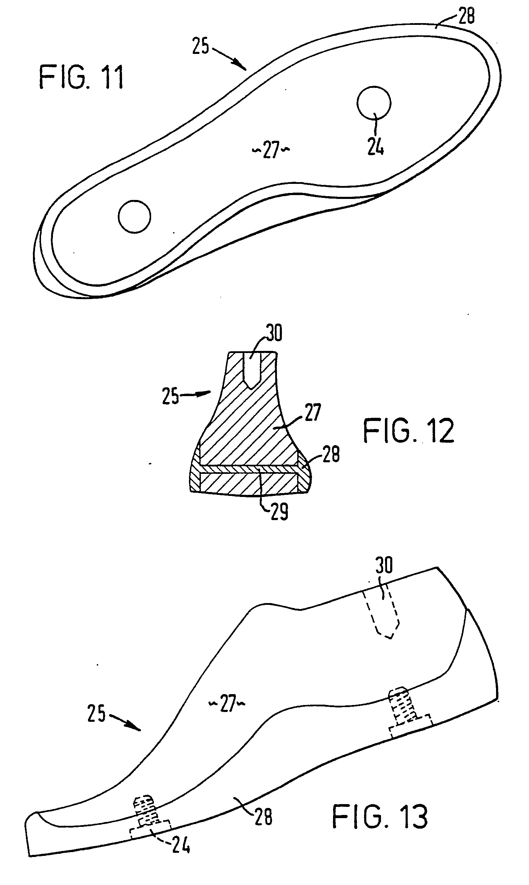

According to Figure 11, after the removal of the last 25 from the first mould conforming to Figure 3, a last for an article of footwear is obtained incorporating a core 27 in an elastomer material such as rigid cellular polyurethane, furnished on its periphery with a thickness of an elastomer material of from 4 to 6 mm forming the sealing joint 28. According to Figure 12, the last 25 incorporates a rigid cellular polyurethane core 27 and a sealing joint 28 in an elastomer such as polyurethane. Anchoring holes 29 have been made in the last 25, these holes also being filled by the elastomer material during the pouring into the mould. Moreover, and in a traditional manner in the technology of the manufacture of lasts for articles of footwear, a dowel 30 is provided for in the upper part of the last 25. The dowel 30 permits the location of the last during the use of the machine for fitting the back of the article of footwear.

According to Figure 13, the last 25 is identical with that shown in Figure 12, and is viewed from the side. It incorporates a core 27 in rigid cellular polyurethane, a sealing joint 28, pegs 24 and a locating dowel 30.

The production last for articles of footwear is made in the following manner: first of all a last is made in wood or in metal (Figure 1). The lower part is covered by applying to it a covering 2 in a self-adhesive material e.g. of coated textiles fabric or vinyl. A mould of the last is made in plaster or resin in the form of two half-moulds or shell components, so that the imprint of the covered last 1 is transposed to the faces of the mould halves opposite to one another.

The last 1 is then relieved as shown in Figure 2. The relieved part of the last, which is destined to receive the sealing joint is then sanded. In the case of the metal lasts the relieved part is degreased by means of a solvent. For wooden lasts, the relieved part is carefully freed from dust after the sanding. Then a polyurethane based primer is applied to the relieved part of the last to enhance the adhesion of an elastomer such as polyurethane to the wood or the metal. Then the last so treated is placed in the mould which has been previously treated with a mould release agent. The last is located and centred in the imprint of the mould (Figure 4) through the upper part of the last. Then with the aid of the pouring duct 6 (Figure 4) an elastomer such as polyurethane is poured in. The exothermic reaction of the polyurethane re-activates the film of primer and the polyurethane becomes secured to the last. When the cross-linking is completed the last is withdrawn from the mould. This will then consist of a core of wood or metal and an elastic sealing joint in an elastomer such as polyurethane over the whole of the periphery of its lower part.

According to this process it is possible to make not only simple one piece pre-production lasts but also articulated pre-production lasts. In the case of an articulated last, during the pouring a thin film of polyethylene is placed in the relieved part of the articulation. When the cross-linking of the polyurethane is completed, the sealing joint is cut at the position of the articulation and the film of polyethylene is removed to allow the movement of the articulated last once again.

A production last is then made from the pre-production last in the following manner. First of all a last is made in wood or in metal, the lower part of which is covered in the manner described earlier. A first mould (Figure 3) is made in plaster or in resin by transposing the imprint of the covered last, the last is relieved in accordance with Figure 1 and a second mould (Figure 7), is made by transposing the imprint of the relieved last (Figure 2). The special conception of the second mould (Figure 7 and Figure 8) makes it possible to inject rigid microcellular polyurethane. After the cross-linking of the blank last, it is removed from the mould and any polyurethane that may have formed in the vents 21 of the mould half 15 is removed. The relieved part is cleaned with solvent to remove the mould release agent and a polyurethane based primer is applied to this relieved part to facilitate the adhesion of the sealing joint 28 to be made. The relieved last blank is placed in the first mould (Figure 3) treated with a mould release agent and the elastomer is poured in to form the sealing joint 28. After the cross-linking the last 25 is removed from the mould. The last 25 thus consists of a core 27 in rigid cellular polyurethane and a sealing joint 28 in polyurethane around the whole periphery of the lower part.

It is also possible to produce articulated lasts by virtue of this process. To do so, the front and the back parts of the last are manufactured in different moulds and the articulation mechanism is located directly in the moulds.

## Claims

1. A method of making a last for an article of footwear, comprising covering the lower part of a last blank with a simulated upper, making a first mould from the covered last, relieving the last blank in the zone of its intended joint with a sole mould, applying a polyurethane based primer to the relieved part of the last blank, treating the internal surface of the first mould with a mould release agent, centring the last blank in the sole mould by its upper part, introducing an elastomeric material into the free space existing between the relieved part of the last blank and the internal surface of the first mould to form a sealing joint on the last, and removing the last from the first mould after cross-linking of the elastomer.

2. A method as claimed in claim 1, wherein anchoring holes for the sealing joint are made in the relieved part of the last blank.

3. A method as claimed in claim 1 or claim 2, wherein the last is articulated and comprising inserting a film of polyethylene in the articulation before pouring of the elastomer, cutting the sealing joint after cross-linking in the vicinity of the articulation and removing the film of polyethylene.

4. A method as claimed in claim 3, wherein the front and back parts of the articulated last are made in different moulds, and the articulation mechanism is located directly in the moulds.

5. A method as claimed in any preceding claim, comprising making a second mould from the imprint of the relieved last, injecting an elastomer into the second mould to form a rigid plastics blank, removing the plastics blank from the mould after cross-linking, cleaning the relieved part of the plastics blank and applying a polyurethane based primer thereto, placing the blank plastics last in the first mould after treating the mould with a release agent and introducing elastomer into the first mould to form a sealing joint on the plastics last.

6. A method as claimed in claim 5, comprising forming a pouring duct in the first mould.

7. A method as claimed in claim 5 or claim 6, comprising forming an injection duct with an obturator in the second mould.

8. A method as claimed in any one of claims 5 to 7, wherein the rigid plastics blank is made from rigid cellular polyurethane.

9. A last made by the method of an preceding claim and comprising an elastomeric sealing joint on its peripheral surface.

10. A last as claimed in claim 9, and made from an elastomer material such as rigid cellular polyurethane.

## Revendications

1. Procédé de fabrication d'une forme pour chaussures, procédé caractérisé en ce qu'il consiste à recouvrir la partie inférieure d'une ébauche de forme d'une empeigne simulée, à réaliser un premier moule à partir de la forme ainsi couverte, à retoucher l'ébauche de forme dans la zone où doit se trouver le joint avec un moule de semelle, à appliquer une première couche à base de polyuréthane la partie retouchée de l'ébauche de forme, à traiter la surface intérieure du premier moule avec un agent de démoulage, à centrer l'ébauche de forme sur le moule de semelle par sa partie supérieure, à introduire une matière élastomère dans l'espace libre existant entre la partie retouchée de l'ébauche de forme et la surface intérieure du premier moule pour former un joint d'étanchéité sur la forme, et à retirer la forme du premier moule après polymérisation de l'élastomère.

2. Procédé selon la revendication 1, caractérisé en ce que des trous d'ancrage du joint d'étanchéité sont percés dans la partie retouchée de l'ébauche de forme.

3. Procédé selon l'une quelconque des revendications 1 et 2, dans lequel la forme est articulée, caractérisé en ce que l'on insère une feuille mince de polyéthylène sur l'articulation avant de verser l'élastomère, coupe le joint d'étanchéité après polymérisation, au voisinage de l'articulation, et retire la feuille mince de polyéthylène.

4. Procédé selon la revendication 3, caractérisé en ce que les parties avant et arrière de la forme articulée sont réalisées dans des moules différents, et en ce que le mécanisme d'articulation est mis en place directement dans les moules.

5. Procédé selon l'une quelconque des revendications précédentes, caractérisé en ce qu'il comprend les étapes consistant à former un second moule à partir de l'empreinte de la forme retouchée, à injecter un élastomère dans le second moule pour former une ébauche de matière plastique rigide, à retirer cette ébauche de matière plastique du moule après polymerisation, à nettoyer la partie retouchée de l'ébauche de matière plastique et à y appliquer une première couche à base de polyuréthane, à placer l'ébauche de forme en matière plastique dans le premier moule après traitement du moule avec un agent de démoulage, et à introduire l'élastomère dans le premier moule pour former un joint d'étanchéité sur la forme de matière plastique.

6. Procédé selon la revendication 5, caractérisé en ce qu'il comprend la formation d'un conduit verseur dans le premier moule.

7. Procédé selon l'une des revendications 5 ou 6, caractérisé en ce qu'il comprend la formation d'un conduit d'injection muni d'un obturateur dans le second moule.

8. Procédé selon l'une quelconque des revendications 5 à 7; caractérisé en ce que l'ébauche en matière plastique rigide est réalisée en polyuréthane cellulaire rigide.

9. Forme réalisée par le procédé selon l'une quelconque des revendications précédentes, forme caractérisée en ce qu'elle comprend un joint d'étanchéité élastique sur sa surface périphérique.

10. Forme selon la revendication 9, caractérisée en ce qu'elle est réalisée en un matériau élastomère tel que du polyuréthane cellulaire rigide.

## Patentansprüche

1. Verfahren zur Herstellung eines Leistens für Schuhwerk, dadurch gekennzeichnet, daß der untere Teil eines Lesitenrohlings mit einem simulierten Oberteil bedeckt, eine erste Form von dem bedeckten Leisten hergestellt, der Leistenrohling in dem Bereich der vorgesehen Verbindung mit einer Sohlenform abgetragen, eine Grundierung auf Polyurethanbasis auf den abgetragenen Teil des Leistenrohlings aufgebracht, die innere Oberfläche der ersten Form mit einem Formentrennmittel behandelt, der Leistenrohling in der Sohlenform mittels seines oberen Teiles zentriert, ein elastomeres Material in den freien Raum, der zwischen dem abgetragenen Teil des Leistenrohlings und der inneren Oberfläche der ersten Form vorhanden ist, eingeführt wird, um ein dichtendes Verbindungselement auf dem Leisten zu bilden, und der Leisten nach dem Vernetzen des Elastomeren von der ersten Form entfernt wird.

2. Verfahren nach Anspruch 1, dadurch gekennzeichnet, daß Verankerungslöcher für das dichtende Verbindungselement in dem abgetragenen Teil des Leistenrohlings ausgebildet werden.

3. Verfahren nach Anspruch 1 oder 2, bei dem der Leisten gefliedert oder mit Gelenk versehen ist, dadurch gekennzeichnet, daß eine Folie aus Polyäthylen in die Glied- oder Gelenkstelle vor dem Eingießen des Elastomeren eingeschoben wird, das dichtende Verbindungselement nach der Vernetzung in der Nähe der Glied- oder Gelenkstelle aufgeschnitten und die Polyäthylenfolie entfernt wird.

4. Verfahren nach Anspruch 3, dadurch gekennzeichnet, daß das vordere Teil und das hintere Teil des untergliederten Leistens in verschiedenen Formen hergestellt wird und die Glied- oder Gelenkeinrichtung direkt in die Formen gelegt wird.

5. Verfahrn nach einem der vorhergehenden Ansprüche, dadurch gekennzeichnet, daß eine zweite Form aus dem Eindruck des abgetragenen Leistens hergestellt wird, ein Elastomer in die zweite Form eingespritzt wird, um einen festen Kunststoffrohling zu bilden, der Kunststoffrohling nach dem Vernetzen von der Form entnommen wird, der abgetragene Teil des Kunststoffrohlings gereinigt und eine Grundierung auf Polyurethanbasis darauf aufgebracht wird, der Kunststoffleistenrohling in die erste Form gelegt wird, nachdem die Form mit einem Trennmittel behandelt worden ist, und ein Elastomer in die erste Form eingeführt wird, um ein dichtendes Verbindungselement auf dem Kunstoffleisten zu bilden.

6. Verfahren nach Anspruch 5, dadurch gekennzeichnet, daß eine Gießleitung in der ersten Form ausgebildet wird.

7. Verfahren nach Anspruch 5 oder 6, dadurch gekennzeichnet, daß eine Einspritzleitung mit einer Abdichtungsvorrichtung in der zweiten Form ausgebildet wird.

8. Verfahren nach einem der Ansprüche 5 bis 7, dadurch gekennzeichnet, daß der feste Kunstoffrohling aus festem zellfürmigem Polyurethan hergestellt wird.

9. Leisten, dadurch gekennzeichnet, daß er durch ein Verfahren nach einem der vorhergehenden Ansprüche hergestellt worden ist und ein elastisches dichtendes Verbindungselement auf seiner Umfangsoberfläche umfaßt.

10. Leisten nach Anspruch 9, dadurch gekennzeichnet, daß er aus einem elastomeren Material wie festem zellförmigem Polyurethan hergestellt ist.

FIG.1

FIG. 2

0 018 087

FIG. 3

FIG. 4

FIG. 6

2

0 018 087

FIG. 5

FIG. 7

FIG. 8

3

FIG. 9

25

24

FIG. 10

25

24

24

26

26

FIG. 11

FIG. 12

FIG. 13